(19) **Europäisches Patentamt**
**European Patent Office**
**Office européen des brevets**

(11) **EP 2 908 597 B1**

(12) **EUROPEAN PATENT SPECIFICATION**

(45) Date of publication and mention
of the grant of the patent:
**14.09.2016  Bulletin 2016/37**

(51) Int Cl.:
***H04W 84/18*** (2009.01)

(21) Application number: **14305190.2**

(22) Date of filing: **14.02.2014**

(54) **Wireless communication network node and method**

Drahtloser Kommunikationsnetzknoten und Verfahren

Noeud de réseau de communication sans fil et procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.08.2015  Bulletin 2015/34**

(73) Proprietor: **ALCATEL LUCENT
92100 Boulogne-Billancourt (FR)**

(72) Inventors:
• **Lin, Chih-Kuang
15 Dublin (IE)**
• **Kennedy, Irwin
15 Dublin (IE)**

(74) Representative: **Sarup, David Alexander
Alcatel-Lucent Telecom Ltd
Intellectual Property Business Group
Christchurch Way
Greenwich
London SE10 0AG (GB)**

(56) References cited:
**EP-A1- 2 552 168          WO-A1-2012/015497
US-A1- 2007 019 604**

• **TAI A T ET AL: "Cluster-based failure detection
service for large-scale ad hoc wireless network
applications", DEPENDABLE SYSTEMS AND
NETWORKS, 2004 INTERNATIONAL
CONFERENCE ON FLORENCE, ITALY 28 JUNE -
1 JULY 2004, PISCATAWAY, NJ, USA,IEEE, 28
June 2004 (2004-06-28), pages 749-758,
XP010710878, DOI: 10.1109/DSN.2004.1311951
ISBN: 978-0-7695-2052-0**

**Description**

FIELD OF THE INVENTION

Aspects and embodiments provide a wireless communication network control node method for use in a wireless communication network comprising a plurality of nodes operable to directly communicate with other nodes, a computer program product and network control node operable to perform that method.

BACKGROUND

Machine to machine communication (M2M) can occur using wireless communication techniques. The channel (or time-frequency resource) over which a signal is to be transmitted should, where possible, be allocated to a device transmitting the signal to avoid signal collision. Thus, a device may be operable to request resource prior to transmitting the signal.

There are various conventional methods of resource allocation, including: coordinated access and uncoordinated access:

Coordinated access

According to such an access scheme, there typically exists a cluster head which acts as a resource allocation controller. In a network coverage case, the cluster head can, for example, comprise an eNB or a dispatcher.

Uncoordinated access

According to such an access scheme, a device, for example a UE (user equipment), is operable to autonomously allocate resources to itself from a pool of semi-statically configured resource blocks. Since it is uncoordinated, the resources allocated are in contention because another device may allocate itself the same resource.

Coordinated access is reasonably straightforward since it is centrally managed. Accordingly, resource (such as channels) can be dedicated to particular devices and collisions can be avoided.

In the case of uncoordinated access, things are not as straightforward. Uncoordinated access can becomee important in device to device communication where central management of communication and resource may be difficult or not possible. In such a scheme, one way to reduce collisions is for the device to detect potential collisions and avoid them where it can.

Examples of such collision avoidance communication schemes include, for example, CSMA (carrier sense multiple access), CSMA/CA (collision avoidance) and CSMA/CD (collision detection). A pure CSMA approach is likely to result in high collision and low throughput since it is quite likely two users may try to transmit at the same time. CSMA/CA and CSMA/CD approaches can be used to reduce collisions. In CSMA/CD, a transmitting node typically listens to a carrier that it is transmitting to detect any collision. If it detects a collision, it will stop transmitting and perform a random (exponential) backoff. In CSMA/CA, a transmitting node is typically operable to send a Request-to-send (RTS) after detecting a carrier is not used and a receiving node is operable to respond to the transmitting node with a Clear-to-send (CTS) signal, if no other node is using the same carrier and the transmitting node transmits upon receiving the CTS. According to such an approach only 1 node may use the carrier at any one time. If the transmitting node does not receive a CTS for a period of time, it is operable to perform a random backoff. Transmission is performed in its entirety and the receiving node will provide an ACK if it receives the transmission. If no ACK is received, the transmitting node will assume collision and perform another random backoff.

EP 2552168, for example, describes a method of scheduling network node transmission in a wireless communication network. One method comprises: causing allocation of each network node of the network to at least one of a plurality of clusters of network nodes. Each cluster of network nodes comprises only network nodes which detect transmissions from every network node within that cluster. The method disclosed comprises scheduling transmissions by network nodes within each of the plurality of clusters to be performed using resources of a transmission separation scheme allocated to be shared by network nodes within that cluster of network nodes.

US 2007/0019604, for example, describes a method for controlling media access in a wireless network. The network comprises first sensor nodes, which exist in a nonoverlapping area where clusters do not overlap, and which access media according to a Time Division Multiple Access (TDMA) scheme, and configured to communicate with a cluster head in a first section. The network also includes second sensor nodes which exist in an overlapping area where clusters do overlap, and which access media according to a contention-based scheme, and configured to communicate with a cluster head in a second section.

Overall throughput is likely to be limited by use of collision avoidance communication schemes. Accordingly, it is desired to provide a means for improving overall throughput in a communication network using collision avoidance communication schemes.

SUMMARY

A first aspect provides a wireless communication network control node method for use in a wireless communication network comprising a plurality of nodes operable to sense other nodes, the method comprising: determining for each node in the network, an indication of direct neighbour nodes; grouping the nodes into node clusters such that each node in the network belongs to one node cluster and each node in the same node cluster can directly sense all other nodes in that cluster, and selecting a set of node clusters such that the total number of node clusters in the network is minimised; assessing, for a selected network performance objective, how many simultaneous signals can be successfully decoded by a node in the network and calculating, based on the assessment, a simultaneous signal group number; comparing the number of node clusters in the selected set of node clusters with the calculated simultaneous signal group number; and modifying the selected set of node clusters in dependence upon the simultaneous signal group number.

Aspects recognize that an increase in signaling in a network may be met with limitations if uncoordinated collision avoidance communication schemes are used. Aspects recognize that it may be possible to increase the capacity of a single carrier star-topology CSMA/CA in an M2M wireless network. It will be appreciated that the throughput of a CSMA/CA approach is likely to be constrained for at least two reasons: low frame multiplexing, and co-channel interference.

Low frame multiplexing occurs due to sub-optimal allocation of temporal resources caused by the "listen before talk" approach implemented by the Carrier Sense Multiple Access method / Collision Avoidance (CSMA/CA). It has, for example, been determined that at peak loads, approximately 50 % of link-layer capacity is lost due to the distributed resource allocation mechanism employed by CSMA/CA.

Co-channel interference occurs as a result of the so-called "hidden terminal" problem, and is caused by simultaneous use of the same temporal resource by multiple nodes, leading to packets collisions at a receiver.

Such constraints may be made more challenging if an extended range IEEE 802.15.4 gateway is considered. In particular, antenna gain asymmetry between communication range and carrier sense range (with a beam forming array at a gateway, omnidirectional at machine node) typically leads to increased hidden terminal problems for the CSMA/CA MAC.

Arrangements described provide a method of clever network organization that combines CSMA approaches and Successive Interference Cancellation (SIC) processes to optimize overall throughput. Some arrangements introduce code-based carrier sensing to CSMA/ CA to enhance overall capacity.

Accordingly, a wireless communication network control node method in accordance with the first aspect may be suited to use in a wireless communication network comprising a plurality of nodes operable to directly communicate with a gateway. That network may, for example, comprise an M2M network or a wireless mesh network, or any other similar network in which CSMA techniques are utilised and in which a control node to coordinate communication between sets of nodes in the network may be provided.

The method may comprise: determining for each node in the network, an indication of direct neighbour nodes. The determination step may, for example, comprise instructing each node to report a neighbour table, instructing each node to perform a max power probe packet transmission and receiving reception results from each node in the network, or any other suitable discovery technique.

The method may comprise: grouping the nodes into node clusters such that each node in the network belongs to one node cluster and each node in the same node cluster can directly sense transmissions made by all other nodes in that cluster. Accordingly, hidden terminals (nodes) within the network can be avoided when performing the grouping step.

The method may comprise: selecting a set of node clusters such that the total number of node clusters in the network is minimised. Accordingly, uncoordinated direct communication methods implemented between nodes within the network may be optimised.

The method may comprise: assessing, for a selected network performance objective, how many simultaneous signals can be successfully decoded by a node, for example, the gateway, in the network and calculating, based on the assessment, a simultaneous signal group number. The selected performance objective may, for example, comprise a desired successful packet reception rate if simultaneous signals are received at a network node, given a selected transmission power of said nodes. Accordingly, throughput associated with colliding or interfering signals within the network can be taken into account when implementing a network node grouping.

The method may comprise: comparing the number of node clusters in the selected set of node clusters with the calculated simultaneous signal group number; and modifying the selected set of node clusters in dependence upon the simultaneous signal group number. Accordingly, the potentially divergent requirements of methods of communication between nodes and a gateway which utilise uncoordinated communication techniques and methods which can accommodate interfering simultaneously received signals can be balanced to provide a network with improved overall throughput.

According to one embodiment, grouping the nodes may occur in accordance with a clustering objective. The objective of clustering is to minimize the number of clusters in a network while preserving alleviation of hidden terminals and meeting beam coverage constraints. Such a task is an NP-complete problem. In other words, it may take a significant and uncertain time to find an optimal solution. Therefore, some embodiments operate to implement a clustering method that operates to achieve the same objective in a deterministic and timely manner.

According to one embodiment, the clustering method may operate according to two principles: reduction of search space and comprehensive search. For the reduction of search space, it is possible to use neighbour information (1-hop neighbour table) and the hidden terminal definition in combination to derive a spatial relationship among local nodes. As a consequence, the search space can be reduced. A prune step may then be performed on clustering results found to achieve a desired minimum number of clusters. An iterative search step can be implemented to find all combinations of cluster sets (given the reduced search space). Such a deterministic search can ensure the alleviation of the hidden terminal problem and help find a minimum number of clusters in a network.

According to one embodiment, if the number of node clusters in the selected set of node clusters is smaller than the calculated simultaneous signal group number; the modifying comprises splitting the set of node clusters into smaller node clusters until the total number of node clusters matches the calculated simultaneous signal group number. Accordingly, adjustment to the selected set of node clusters may be made to take advantage of collision and interference communication techniques.

According to one embodiment, the splitting of said node clusters is performed such that the variation of size of the node clusters is minimised. Accordingly, adjustment to the selected set of node clusters may be made to take advantage of collision and interference communication techniques yet balanced with collision avoidance techniques used within a cluster group.

According to one embodiment, if the number of node clusters in the selected set of node clusters is greater than the calculated simultaneous signal group number; the modifying comprises merging the set of node clusters into larger node clusters until the total number of node clusters matches the calculated simultaneous signal group number. Accordingly, adjustment to the selected set of node clusters may be made to take advantage of collision and interference communication techniques.

According to one embodiment, merging of the node clusters is performed such that hidden nodes in the network as a result of the merged node clusters is minimised. Accordingly, adjustment to the selected set of node clusters may be made to take advantage of collision and interference communication techniques yet balanced with collision avoidance techniques used within a cluster group.

According to one embodiment, determining for each node in the network an indication of direct neighbour nodes and assessing, for a selected network performance objective, how many simultaneous signals can be successfully decoded by a node in the network, takes into account node beam pattern coverage. Accordingly, beam coverage patterns from a gateway may be taken into account when determining how best to configure the network for communication.

According to one embodiment, assessing, for a selected network performance objective, how many simultaneous signals can be successfully decoded by a node in the network comprises: assessing, based on use of Successive Interference Cancellation (SIC) processes within a network and the performance objective how many simultaneous signals can be successfully decoded by a node in the network. Accordingly, the collision based techniques implemented by a network may comprise SIC processes.

According to one embodiment, calculating, based on the assessment, a simultaneous signal group number comprises: determining, for non-simultaneous signalling between the nodes, an indication of bandwidth utilisation, and dividing the assessed number of simultaneous signals which can be successfully decoded by a node in the network by a bandwidth utilisation ratio to give the simultaneous signal group number. Accordingly, when the simultaneous signal group number is calculated, utilisation of available bandwidth by collision avoidance communication techniques, such as CSMA/CA may be accounted for.

According to one embodiment, the method comprises: informing the plurality of nodes of the modified selected set of node clusters to enable appropriate cluster group sensing. Accordingly, the method may be performed by a control node, such as a gateway, having significant computing power and the network nodes may be informed of the result of the calculation in order to operate most efficiently.

According to one embodiment, the method comprises: instructing the plurality of nodes to perform code-based carrier sensing uncoordinated access communication within the cluster group. If using both SIC and traditional energy-based carrier sensing, a node may be operable to execute backoff in CCA processes if a signal's energy is above the CCA threshold. If this node is from another cluster, such a backoff will be unnecessary when the SIC can handle overlapping transmissions from different clusters. Thus a method to mitigate this problem may be implemented. In particular, the use of code-based carrier sensing, may be implemented. Accordingly, all nodes within a cluster may be allocated an identical code.

According to one embodiment, the method comprises: informing the plurality of nodes of a power assignment required to make use of the simultaneous signals. Accordingly, efficient power settings may be implemented by nodes within the network.

A second aspect provides a computer program product operable, when executed on a computer, to perform the method of the first aspect.

A third aspect provides a wireless communication network control node for use in a wireless communication network comprising a plurality of nodes operable to directly sense other nodes, the network control node comprising:

neighbour determination logic operable to determine for each node in the network, an indication of direct neighbour nodes; grouping logic operable to group the nodes into node clusters such that each node in the network belongs to one node cluster and each node in the same node cluster can directly sense all other nodes in that cluster, and selecting a set of node clusters such that the total number of node clusters in the network is minimised; simultaneous communication logic operable to assess, for a selected network performance objective, how many simultaneous signals can be successfully decoded by a node in the network and calculating, based on the assessment, a simultaneous signal group number; cluster adjustment logic operable to compare the number of node clusters in the selected set of node clusters with the calculated simultaneous signal group number; and modify the selected set of node clusters in dependence upon the simultaneous signal group number.

According to one embodiment, the network control node comprises a node gateway.

According to one embodiment, if the number of node clusters in the selected set of node clusters is smaller than the calculated simultaneous signal group number; the cluster adjustment logic is operable to split the set of node clusters into smaller node clusters until the total number of node clusters matches the calculated simultaneous signal group number.

According to one embodiment, the cluster adjustment logic is operable to split the node such that the variation of size of the node clusters is minimised.

According to one embodiment, if the number of node clusters in the selected set of node clusters is greater than the calculated simultaneous signal group number; the the cluster adjustment logic is operable to merge the set of node clusters into larger node clusters until the total number of node clusters matches the calculated simultaneous signal group number.

According to one embodiment, the cluster adjustment logic is operable to merge the node clusters such that hidden nodes in the network as a result of the merged node clusters are minimised.

According to one embodiment, the neighbour determination logic and simultaneous communication logic are operable to take into account node beam pattern coverage.

According to one embodiment, the simultaneous communication logic is operable to assess, for a selected network performance objective, how many simultaneous signals can be successfully decoded by a node in the network comprises: by assessing, based on use of Successive Interference Cancellation (SIC) processes within a network and the performance objective how many simultaneous signals can be successfully decoded by a node in the network.

According to one embodiment, the simultaneous communication logic is operable to calculate, based on the assessment, a simultaneous signal group number by determining, for non-simultaneous signalling between the nodes, an indication of bandwidth utilisation, and dividing the assessed number of simultaneous signals which can be successfully decoded by a node in the network by a bandwidth utilisation ratio to give the simultaneous signal group number. According to one embodiment, for a selected performance objective (e.g., 5 successful transmissions in 6 total transmissions), simultaneous signal group number = total transmission number/bandwidth utilization ratio. According to one embodiment, the bandwidth utilisation may comprise bandwidth utilisation in relation to non-simultaneous CSMA transmissions from multiple nodes in the same cluster.

According to one embodiment, the network control node comprises: communication logic operable to inform the plurality of nodes of the modified selected set of node clusters to enable direct cluster group communication.

According to one embodiment, the network node comprises: communication logic operable to instruct the plurality of nodes to perform code-based carrier sensing uncoordinated access communication within the cluster group.

According to one embodiment, the network control node comprises: communication logic operable to inform the plurality of nodes of a power assignment required to make use of the simultaneous signals.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates a general cross-layered network optimization procedure;
Figure 2 shows a heuristic search process that operates to minimize the number of clusters in a network while preserving alleviation of hidden terminals and meeting beam coverage constraints;
Figure 3a illustrates schematically one example of clustering formation;
Figure 3b illustrates the clustering result tree formed from the cluster of nodes shown in Figure 3a;
Figure 4 illustrates graphically an IEEE 802.15.4 PHY example of the combined probability for 1 through to 14 simultaneously transmitting nodes with 100x cancellation efficiency, aiming for equal SIR at the receiver;
Figure 5 is a signalling diagram illustrating a general procedure;
Figure 6a is a plot of capacity enhancement ratio of methods described and benchmarks;
Figure 6b illustrates schematically the energy efficiency of the compared schemes of Figure 6a;
Figure 7a illustrates schematically network operation after set up; and
Figure 7b illustrates schematically a network according to one arrangement.

DESCRIPTION OF THE EMBODIMENTS

Before discussing the embodiments in any more detail, first an overview will be provided.

Arrangements described provide a method of clever network organization that combines CSMA approaches and Successive Interference Cancellation (SIC) processes to optimize overall throughput. Some arrangements introduce code-based carrier sensing to CSMA/ CA to enhance overall capacity.

According to a general arrangement, the steps involved in capacity optimal network organization may include:

neighbour discovery;
centrally pruning and searching to discover all node cluster combinations;
centrally computing max. capacity a SIC enabled PHY (physical layer) can achieve (for example, for 5 saturated CSMA/ CA links, it may be that roughly 40-60 % of bandwidth is utilized for data communications and an approx. 8 to 12 SIC-aware CSMA/CA cluster set is optimal);
merging or splitting clusters to balance SIC and CSMA/CA
communicating code and power assignment to all nodes

Approaches implementing such a general arrangement recognise that it may be necessary to balance various factors, including:

Complexity:

Implementations can recognise that clustering computational complexity is deterministic and run in polynomial time. Control overhead can be limited to network establishment and node addition. Node addition can be a local process, without a need for a global network update.

Optimality:

Some implementations adopt a heuristic algorithm which can exploit the structure of the NP-complete problem to provide a nearly optimal solution in polynomial time.

Algorithm description

It will be appreciated that an algorithm to implement the steps of the general arrangement described above is configurable. The clustering objective of the algorithm is that of deriving all possible sets of cluster combinations covering all nodes in a network such that the number of clusters in each cluster set is minimized (or the average cluster size is maximized) whilst maintaining the alleviation of hidden terminals and constraints of beam patterns. The clustering algorithm operates such that every node is included in a cluster such that no hidden terminal exists inside any cluster, while at the same time, the optimal frame multiplexing opportunity is preserved inside the cluster.

SIC constraints are then combined with the clustering constraints to increase frame multiplexing and to reduce inter-cluster hidden terminal problems. This involves a performance and power control analysis of SIC and a performance analysis for coexistence of SIC and the hidden terminal problem.

It will be appreciated that the problem of determining optimal clustering with beam forming control and SIC is NP-complete.

1. Heuristic search algorithm for cluster formation:

To reduce the hidden terminal problem and maintain the multiplexing efficiency of nodes, a heuristic search algorithm is designed to find all possible cluster sets that meet the clustering objective criteria. The searching may include, for example, the following rules:

The search may consider limitations of beam pattern coverage, and the cluster searching process can be run to take into account that limitation. In the end, the search may find a cluster set operating in a single or multiple beam patterns.

Given mutual interference among neighboring nodes, the search may use radio connectivity information amongst neighboring nodes as a search metric. This metric denotes a weight parameter of clustering process, which is equal to the number of 1-hop neighboring nodes of a node. Next, a minimum weight search algorithm is adopted to reduce the cluster size variation between clusters, consequently leading to the maximum of average cluster size as the clustering objective. In the minimum weight search, a cluster is sequentially formed by the nodes with a less weight and all joined nodes inside the cluster can sense transmissions among each other. Finally, the selected nodes in any cluster can directly hear transmissions of any other node in the same cluster, resulting in no intra-cluster hidden terminal problem.

Such a search can be repeated until every node joins one cluster. In order to ensure fairness, each node is only assigned to one cluster.

A prune and search method may be implemented as part of the clustering process. Such a prune and search method may operate to reduce the search space using the definition of hidden terminal, the connectivity relationship between nodes, and the minimum weight approach. In addition, it ensures that the nodes satisfying the weight condition build a sub-tree of clusters in every iteration of cluster formation.

Eventually, all of the clustering results are captured and a representation of the derived cluster sets comprises a tree structure.

2. Capacity optimization framework

The findings of the heuristic search algorithm described above can then be used to perform further steps of the general technique. In particular, an optimization process can be performed to integrate the SIC technique with the clustering results the aim being to improve the aggregated throughput.

Successive Interference Cancellation (SIC) processes are based on receive power coordination between different nodes and interference removal at a receiver and aim to achieve equal Signal to Interference and Noise Ratio (SINR) for all nodes. The performance of SIC is theoretically unlimited, but in reality it is bounded by data encoding in physical layer, channel estimate, interference, and similar. The SIC performance analysis and power estimates can be calculated and that calculation can be used to generate a SIC group limit, based on a chosen performance desired by an operator for chosen optimal throughput capacity.

It will be appreciated that there may be a disparity between determined optimal cluster results and a selected SIC group limit, and merge/split cluster steps may be implemented in response to various scenarios:

If the size of optimal cluster set is smaller than that of SIC group limit: the derived clusters can be split to meet the SIC group limit to seek optimal performance with SIC. In splitting the clusters, it can be ensured that variation of all cluster sizes is minimal.

If the size of optimal cluster set is larger than that of SIC group limit: the derived cluster sets can be merged to meet the SIC group limit. In the cluster merge, the hidden terminal problem is likely to appear inside a cluster. It is possible to verify all combinations of the cluster merge and choose the cluster merge resulting in the least hidden terminal impact on the network.

The size of optimal cluster set is dependent on the SIC group limit and bandwidth utilization of CSMA/CA links. For the optimal throughput performance, the size of optimal cluster set may be set such that it is equal to the SIC group limit divided by bandwidth utilization ratio of data communications of saturated CSMA/CA links.

3. System operation

The heuristic search algorithm for cluster formation followed by the capacity optimization steps form the control phase, and can then be followed by a data communication phase. All nodes of a network may be operable to use code-based carrier sense, SIC receive power coordination, and cluster-enabled CSMA/CA with a SIC-supported receiver to deliver data packets.

<u>Simulation</u>

To show feasibility of the abovementioned optimization framework, it is possible to run a network simulation study. The cross-layered capacity optimization algorithms outlined generally above aim at maximizing the data throughput at a gateway while consuming minimal transmit power from all nodes. In some arrangements all computations can be performed at the gateway or access network and the complexity of the approach is manageable because the search and optimization process comprises deterministic algorithms solved by linear programming methods.

The cross-layered optimization methodology described can also be applied to wireless mesh networks, where an optimal cluster-based routing method for packet delivery may be required.

a) Routing protocol for IEEE 801.11 wireless mesh networks or IEEE 802.15.4 multi-hop WSN

For a routing problem of a wireless network, a receiver or sender may be operable to compute a route based on a distance metric, a direction metric, or a performance metric. In such a network, nodes are unlike M2M devices and the optimization objectives may be different. However, it is possible to reformulate such a routing problem with a cross-layered optimization method as previously described such that an end-to-end route is computed with multi-layer information and efficient route searching. For example, capacity-driven routing protocol may be used to find a complete route using a link layer packet reception rate. By integrating the heuristic search and optimization ideas described above with a capacity driven routing protocol, a novel route selection approach can be formulated and a cross-layered capacity estimation and directional routing with beam forming are analyzed together to provide an optimal route selection.

Example

1. Background: System Model:

Given a M2M network with an extended-range gateway in accordance with an IEEE 802.15.4 standard for communications, M2M devices face a communication constraint resulting from inadequate transmission efficiency and energy constraints resulting from limited energy supplies associated with, for example, a battery.

In particular, transmission efficiency is important for a communication system if an application demands a high volume of traffic exchanges. It is desired to enhance the transmission efficiency of the above-mentioned generalised M2M network where every node reports its sensed data toward a single Gateway (GW) as a data sink that leads to a communication bottleneck in the network. In addition, typical constraints, e.g., short communication range, energy-limited node, and the hidden terminal problem can be considered. Arrangements may address such problems whilst maintaining the compatibility with the IEEE 802.15.4 standard, and approaches may be such that communication and computation overheads can be pushed toward a GW side and minimise a leaf node's involvement.

Arrangements may allow the following key technologies to work together in an improved manner:

(1) Extended-range functionality between any sensor and the GW
(2) CSMA/CA transmission enhancement
(3) Successive Interference Cancellation process (SIC) for improved frame multiplexing and packet decoding

Each individual technology has its own with benefits and challenges. For example, the first feature, the extended-range functionality, is based on an idea of directive phased-array and it can reduce the number of intermediate transmissions between any source node and the GW given the default short communication range constraint. With this functionality, the GW directly covers more nodes that reduces the communication complexity and energy cost of packets delivery but that functionality simultaneously introduces limitations, e.g., worse communication bottleneck near the GW and worse hidden terminal problems, possibly leading to degradation of the transmission efficiency. Techniques can be deployed to address such a problem in the GW side, e.g., a dynamic beam forming capability and/ or use of a SIC process. The beam forming technology can increase a wireless link budget and reduce co-channel interference whilst SIC is a signal processing method that can suppress interference of undesired signals and increases accuracy of decoding a packet. Arrangements described combine such technologies together in a manner which can optimize transmission performance of a proposed system while meeting the system constraints.

2. Cross-layered system capacity optimization - Theory

The underlying approach is a combined method of cluster-based topology control and SIC-aware system capacity optimization, which takes into account the abovementioned key technologies.

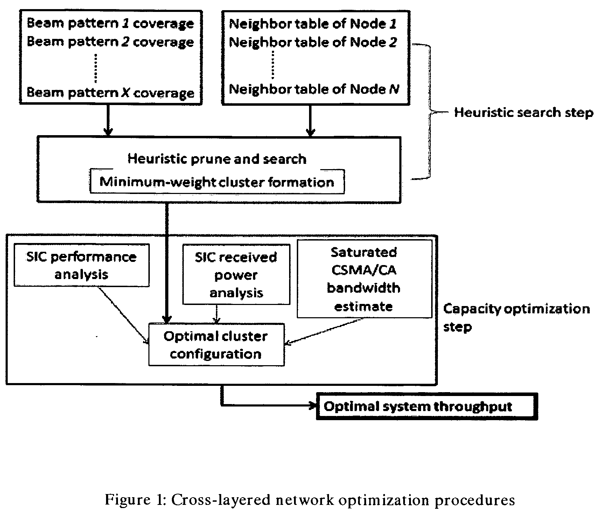

Figure 1 illustrates a general cross-layered network optimization procedure. As shown in Figure 1, procedures may provide cluster-based topology control with a heuristic searching step, based on inputs of a finite set of beam pattern coverage and neighboring information of all nodes. The heuristic searching step operates to arrange every node to join one cluster in a network in a way that every node of the same cluster can overhear each other, resulting in no hidden terminal existed in that cluster (alleviating intra-cluster hidden terminals). With this clustering guideline, the clustering outcome may be a set of fragmented clusters that underutilizes the multiplexing benefits of CSMA/CA. As a result, a bandwidth-efficient clustering objective is needed to create an optimal cluster set, in which no intra-cluster hidden terminal exists and according to which the number of clusters is minimized in the network. In addition, beam forming properties of a network can be taken into account in this cluster formation since it may impact the wireless link between nodes and the GW. With a different selection of beam patterns, the clustering results of a network may vary.

To find a solution for this NP-complete problem, it is possible to implement a heuristic search method to derive optimal cluster sets. The results can be represented as a cluster tree that covers all combinations of derived cluster sets. In accordance with a general procedure illustrated in Figure 1, a capacity comparison for all derived cluster sets can be performed.

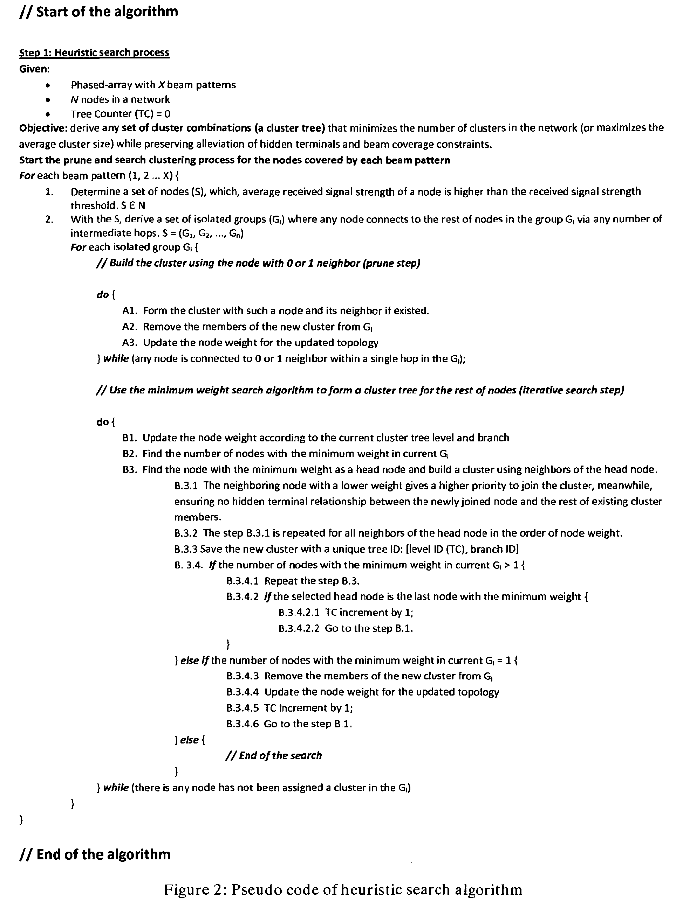

Figure 2 shows a heuristic search process that operates to minimize the number of clusters in a network while preserving alleviation of hidden terminals and meeting beam coverage constraints. It includes following steps:

To start the cluster searching, in control phase, every node and a GW exchange probe packets with node ID in every beam pattern to determine radio connectivity between the nodes and GW under each beam coverage. During this process, nodes also hear the probe packets of neighboring nodes and derive a one-hop neighbor table. Here, the probe is transmitted with the maximum transmit power of a node for the maximum range.

With the information collected in the control phase, in each beam pattern a set of groups where any node connects to the rest of nodes in the group $G_i$ via any number of intermediate hops is derived. Different groups of nodes that are completely separated in terms of the radio connectivity are identified.

Under each group, two steps are run to search clusters: A common set of clusters with 1 or 2 nodes is derived in the prune step.

Next, an iterative search method to find all combinations of cluster sets following the minimum weight search method that considers the hidden terminal problem and bandwidth efficiency is implemented.

The search method above is repeated in every derived group $G_i$ of every beam pattern and results in all possible cluster combinations for the network.

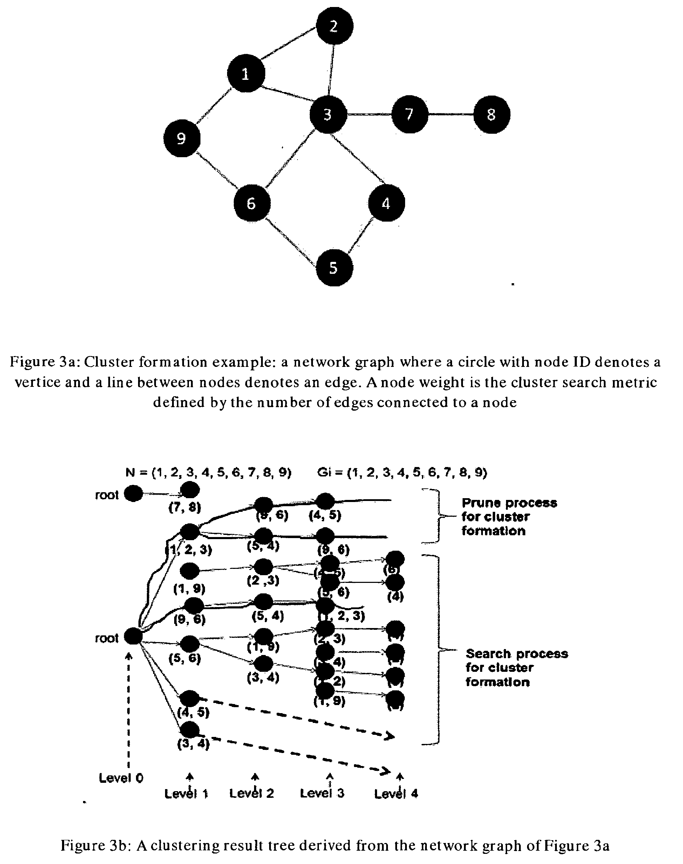

Figure 3a illustrates schematically one example of clustering formation. In the example shown, cluster searching starts with the prune process and finds the node 8 with 1 neighbor. It then forms a common cluster with the nodes 7 and 8 ($1^{st}$ cluster). The prune process does not find any nodes with zero or one edge, so the iterative search process begins. Given the updated network graph without nodes 7 and 8, the derived minimum node weight is 2. The nodes meeting such a node weight include nodes 2, 9, 5 and 4. Starting with node 2, the $2^{nd}$ cluster is formed with nodes 1, 2, and 3 and the update network graph has nodes 4, 5, 6, and 9 left. According to such a network graph, the minimum node weight is 1 and the nodes 4 and 9 meet such a condition. If nodes 4 and 9 are used to start a cluster formation, the resulting $3^{rd}$ and $4^{th}$ clusters are [(9, 6) (4, 5)] and [(4, 5) (9, 6)], respectively. The explaination above describes the cluster formations, initiated by the node 2 posterior to the prune process. Similar procedures are also adopted by the nodes 9, 5 and 4 posterior to the prune process.

Figure 3b illustrates the clustering result tree formed from the cluster of nodes shown in Figure 3a. It will be appreciated that the cluster formations, initiated by the node 4, are not fully shown in Figure 3b due to space constraints. The red lines denote optimal cluster sets covering all the nodes in the group according to the heuristic process described.

Capacity optimization is the next step in the general process and is such that it seeks to implement an optimal cluster configuration based on the clustering results of the heuristic search process. Capacity optimization can be based on performance analysis with respect to the SIC and CSMA/CA performances. This step may include three main procedures:

1. SIC receive power and performance analysis:

The clustering results of heuristic search process and a targeted SIC performance are provided. Communication limits of the SIC and its associated received power configuration for packet receptions can be derived. With such an analysis, an optimal SIC group configuration based on a performance objective can be chosen. For example, for a Packet Reception Rate 80 %, it may be shown that 5 simultaneous SIC transmissions (groups) can be supported while meeting the packet reception rate requirement.

Mathematical analysis to capture the SIC performance may be performed. It is possible to calculate the required receive power for each node. This can be done by ensuring all nodes are received with equal SINR. The algorithm for doing this is known. Then it is possible to calculate the corresponding transmit power, given the pathloss, which can be measured during the network initialization stages. The receive power probability distribution is, of course, typically not known in advance since it is dependent on the propagation channel variation between a node and the gateway. From literature however, it has been shown that for indoor stationary nodes, the channel does not change much. During operation the statistics of the channel can be learned from packet transmissions and receptions to build a probability distribution function which matches actual observations.

For illustrative purposes, assume all nodes share the same probability distribution function, with the variation in receive power due to the signal taking multiple, slightly time varying paths. Variations are due to people moving around in the indoor environment, e.g. an office. The paths experience different delays and attenuation and are summed at the receiver. Since they arrive with different phases, the resulting power varies around a mean, higher when the paths sum coherently, lower when the paths sum incoherently. It is assumed, for illustrative purposes, that the variation in the channel is a white process, 14dB below the main channel structure. This model can be derived from published channel measurements.

It is possible to calculate the probability of receiving each packet, by calculating the probability that the minimum required SINR (approx. -2dB for 802.15.4 with optimal baseband decode at gateway) will be satisfied given the spacing between receive powers and the statistics of their variation . For the first packet, no cancellation occurs. For subsequent packets, the already received packets are cancelled, resulting in their contribution to the interference power being a factor (e.g. 100x) less than the power they were received at.

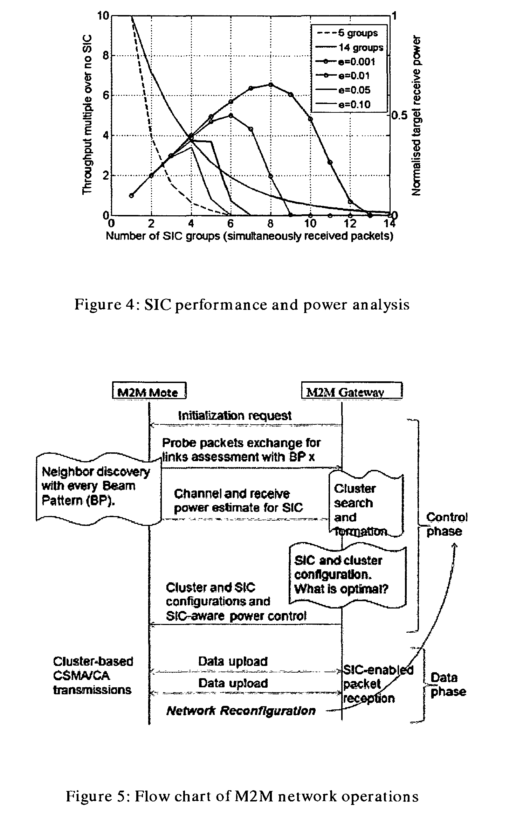

Figure 4 illustrates graphically an IEEE 802.15.4 PHY example of the combined probability for 1 through to 14 simultaneously transmitting nodes with 100x cancellation efficiency, aiming for equal SIR at the receiver. As can be seen in Figure 4, for two nodes, the probability of both packets being successfully decoded is very nearly 100%. However, as the number of simultaneous packets increases, the chance of error also increases. (See table below)

2. Integration of cluster CSMA/CA and SIC group

By performing a SIC performance analysis and setting a performance objective, an optimal SIC group limit can be found. To optimally adopt the SIC group limit in the cluster-enabled CSMA/CA, a comparison is made of the number of clusters in the derived optimal cluster set T* and the number of groups in the SIC group limit S*.

if T* <= S*

The clusters can be split such that the number of clusters is equal to that of the SIC group. In the splitting, alleviation of hidden terminals can be maintained and variation of cluster sizes can be minimized. It will be appreciated that system capacity depends on the SIC performance and the CSMA/CA performance without hidden nodes.

if T* > S*

Given the number of derived clusters exceeding the number of the SIC group limit, the additional clusters can be merged into the rest of clusters, meeting the optimal SIC group configuration but potentially violating the hidden terminal problem. The achieved trade-off between SIC effect and CSMA effect is an open question. In addition, there is a finite number of possible merging cluster combinations $C_X^Y$ where Y is the number of derived clusters and X is the number of optimal SIC groups. They are all considered in capacity evaluation to minimize the impact of hidden terminals. During the cluster merging process, the principle, merged nodes are merged into default clusters of the cluster combination where the hidden terminal effect is minimized, is followed. Afterwards, the resulting cluster comprises two types of nodes: default cluster member and merged cluster member (potential hidden terminal). The effect of this merge is a trade-off between SIC benefit and hidden terminal impact that can be shown in the following simulation.

It will be appreciated that the size of optimal cluster set is not only dependent on a SIC group limit but also affected by bandwidth utilization of CSMA/CA links. To achieve an optimal throughput performance, the size of optimal cluster set may be equal to the SIC group limit divided by bandwidth utilization ratio of data communications of saturated CSMA/CA links. The bandwidth ratio can be determined either via a theoretical model or a network simulation.

In some arrangements, it will be appreciated that the cross-layered capacity optimization method described may be performed as a centralized method running in a GW or access network. It matches some proposed M2M architecture having, for example, a star topology.

3. M2M communication design and discussion for the proposed techniques

It is possible to describe how the proposed technology can be used for M2M applications.

Figure 5 is a signalling diagram illustrating a general procedure. Under the system assumptions early described, Figure 5 shows the overall procedures for nodes and the GW. In the control phase, the nodes and the GW cooperatively collect the link quality of each Beam Pattern (BP) and neighbor information, enabling the GW to execute the cluster formation and cluster-based CSMA/CA. With the use of SIC technology, coordinating transmissions among clusters is not needed. However, it is possible to control allocation of time resources to a cluster or carrier-sensing backoff operations of cluster members to achieve a cluster or node prioritization since operations of CSMA/CA and cluster scheduling are time-division duplexing. Subsequently, the nodes follow the derived cluster setup in the data phase, for which any nodes with any pending data use the IEEE 802.15.4 CSMA/CA to send the data in the cluster and beam forming manners. Such operation is applicable to both the node and the GW side, as are the implemented algorithms.

If using both SIC and traditional energy-based carrier sensing, a node may be operable to execute backoff in CCAprocesses if a signal's energy is above the CCA threshold. If this node is from another cluster, such a backoff will be unnecessary when the SIC can handle overlapping transmissions from different clusters. Thus a method to mitigate this problem may be implemented. The use of code-based carrier sensing, which has been specified in the IEEE 802.15.4 standard may be implemented. By configuring all members of each cluster with an identical spreading code and different codes between members of different clusters, the abovementioned carrier sensing problem can be alleviated. Since the number of clusters is limited due to the optimal SIC group configuration, the code management is simple. The table below demonstrates interactions of SIC and two carrier sensing approaches, affecting the probability of CCA failure $P_{CCAfailure}$.

Setup: Assume a cluster with 20 nodes. Coverage of a node is a unit disk graph. Derive the probability of any hidden terminal for any cluster member, given the uniform node distribution in a field. As a result, the number of competing nodes with the code-based and energy-based carrier sensing can be derived for the $P_{CCAfailure}$ analysis. This analysis shows performance differences with the compared carrier sensing schemes for SIC.

| | Traffic intensity (packets/ second/ node) | $P_{CCAfailure}$ |
| --- | --- | --- |
| | 10 | 0.02 |
| Code-based carrier sensing | 20 | 0.16 |
| | 30 | 0.30 |
| | 40 | 0.38 |
| | 10 | 0.07 |
| Energy-based carrier sensing | 20 | 0.30 |
| | 30 | 0.39 |
| | 40 | 0.45 |

It will be appreciated that code-based transmission between clusters helps decode received packets (short spreading code used for identification). However, a combination of that and SIC presents an issue, i.e., the near and far problem. It is not possible to use the power control to reduce this problem because of the SIC configuration. So, the packet decoding of simultaneous receptions from different clusters is only addressed by the SIC in techniques described herein.

In relation to the heuristic cluster search process, an open question is that of the feasibility of derived cluster sets. A simulation study with the proposed cluster search algorithm to determine the optimal cluster sets in a large scale indoor office environment with 100 nodes has been performed. That result can be compared with an ideal cluster deployment analysis based on trigonometric functions. The trigonometric analysis matches the simulation result. In addition, the simulation has taken into account the indoor radio propagation, which is not included in the mathematical analysis. In the simulations, more hidden terminal relationships exist among nodes, creating more fragmented clusters. The study shows the proposed cluster search process derives nearly optimal results.

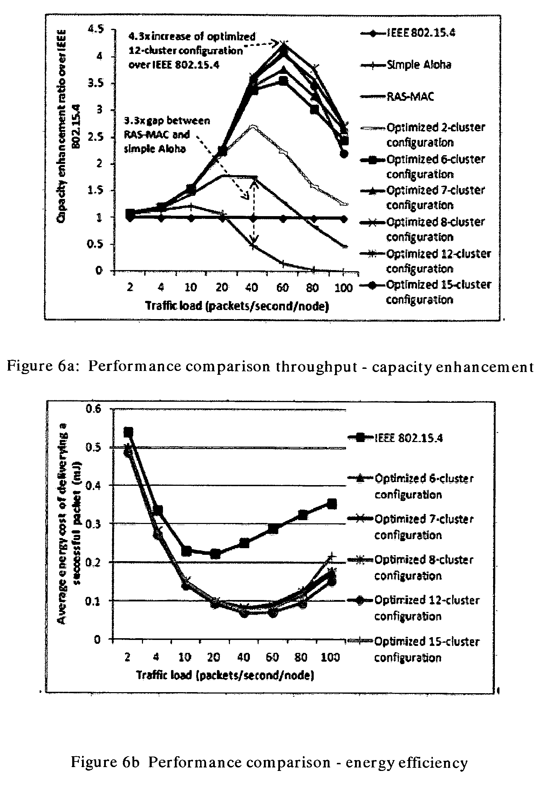

Performance comparisons of the proposed work and two benchmarks can be seen in Figures 6a and 6b. Figure 6a is a plot of capacity enhancement ratio of methods described and benchmarks. Performance with different cluster configurations is similar with low traffic load (up to 40 packets/second/node) and the variation increases as the traffic is saturated since the SIC gain frequently occurs with overlapping transmissions (likely to happen with saturated traffic). If the concurrent traffic is intensive or the contention of channel access is high, both of them lead to a poor system performance (e.g., high traffic load cases of 80 and 100 packets/second/node).

In the SIC analysis with e = 0.01, a peak capacity of 5x occurs for 6 simultaneous transmissions as shown in Figure 4. This closely matches the 4.3x peak for 12 clusters and 60 packets/second/node traffic in Figure 6a. The small difference in peak throughput improvement (5x versus 4.3x) is due to the use of a real network topology and base channel structure in the simulations. The large gap in the number of clusters providing peak throughput in the simulation and numerical analysis (12 versus 6 resp.) can be explained by the delays introduced by random back off and CCA contention in CSMA/CA. For the peak throughput achieved in simulation the delay time amounts to 55 % of total time. The result shows that it takes approximately twice the number of clusters (6/0.45=12 clusters approx.) to saturate the air interface, generating 5.4x traffic with a packet success ratio of 80 % producing 4.3x throughput. This matches the SIC analysis shown in Figure 4.

For the interactive analysis between a cluster configuration and SIC setup with different traffic loads, a cluster set of more clusters has less failed packets with hidden terminals and more failed packets with SIC failure compared to that of fewer clusters. This tradeoff has a bias in favor of the SIC degradation up to the 12-cluser configuration. Beyond this cluster set, vice versa. In addition, a cluster set with fewer clusters (in other words, a larger number of nodes per cluster) creates more dropped packets due to the CCA contention failure and packet overflow problem. Both failures are linked to high channel contentions in CCA process. It will be appreciated that a network with low traffic results in a small amount of packet failures but the maximum system throughput is not achieved. By increasing the traffic intensity, the proposed techniques can achieve a 4.3 fold system throughput improvement with 80 % packet reliability.

Figure 6b illustrates schematically the energy efficiency of the compared schemes of Figure 6a. Described methods may saves up to 67 % energy by performing reliable data deliveries although the SIC power control may require a higher transmit power.

Embodiments of the described methods may provide various opportunities. In particular, it may be beneficial for static M2M applications, e.g., smart grid and smart meter networks, running IEEE 802.15.4 standard. The proposed method is highly compatible with the IEEE 802.15.4 standard and uses a series of control message exchanges in control phase to setup the SIC and cluster coordination. Thereafter, data communication of nodes follows the typical IEEE 802.15.4 protocol in a way that the nodes run the 802.15.4-compliant MAC to manage channel access and send data while the receiver adopts the SIC-enabled packet reception to decode the data packets.

In a static M2M network, control overhead is generated once in the control phase. Then the M2M network operates effectively in a realistic indoor office environment with time varying channels according to the simulation study outlined above. In the case where an M2M network adds or deletes nodes, only the cluster formation need be performed again. Coverage of the cluster reformation may be either localized or globalized, depending on the degree of network changes. To estimate such network changes, various statistical approaches, e.g., machine learning, Bayesian estimate, etc, can be applied. Effects of such control overhead can be tuneable and controlled by a network operator. In general, the overhead cost of the proposed method is small and manageable and it is especially light for static M2M applications according to the simulation outlined above.

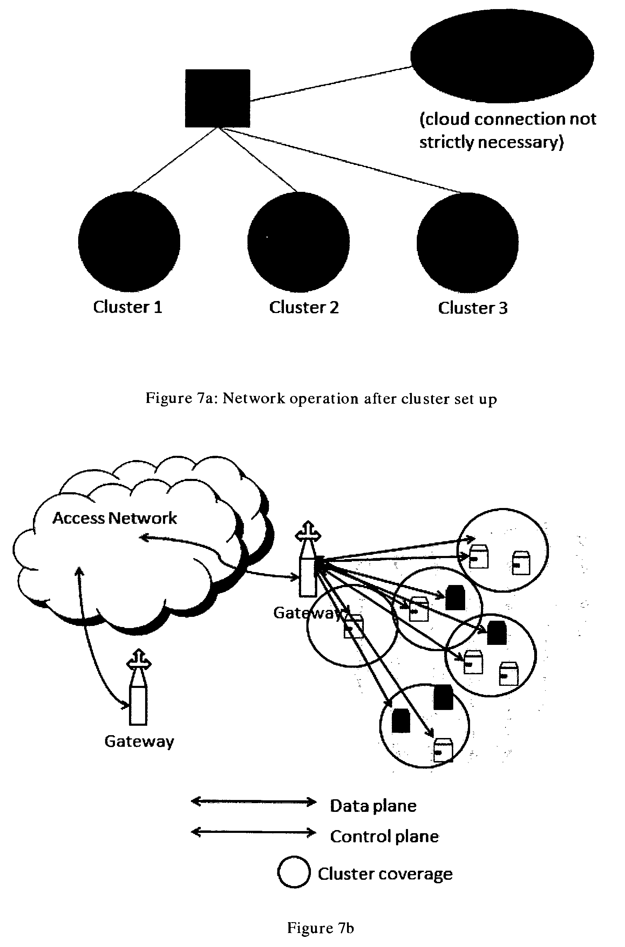

Figure 7a illustrates schematically network operation after set up. It can be seen from Figure 7a that in the arrangement shown, all nodes transfer data directly to the gateway. No data transfer occurs directly between nodes inside clusters or between nodes in different clusters. Within a cluster, CSMA is performed to share the medium. That is to say, within a cluster the aim is for one node to transmit to the gateway at a time. All nodes in a cluster use the same code. Codes can be used to allow nodes within a cluster to distinguish between transmissions within their cluster and those from other clusters. Nodes from different clusters can communicate with the gateway simultaneously, The aim, in the illustrated example, would be to have a maximum of three simultaneous transmissions (one each from cluster 1, 2, and 3). Interference cancellation can be performed at a gateway to decode the simultaneously transmitted messages.

Figure 7b illustrates schematically a network according to one arrangement. It can be seen that nodes are operable to send data to the gateway in accordance with code-based CSMA/CA techniques. The intra-cluster hidden terminal problem can be allieviated by using efficient clustering of nodes into sets. Inter-cluster hidden terminal issues can be alleviated by SIC techniques. Optimal frame multiplexing and transmissions are enabled by integrated SIC and CSMA cluster coordination.

It will be appreciated that the growth area of M2M networks will face a diverse set of applications and increasing number of nodes. System capacity demand on IEEE 802.15.4 communications is therefore inevitable. Described approaches can provide an architecture and heuristic algorithm for achieving near optimal capacity. Approaches can operate within IEEE 802.15.4 standard specifications and may be quickly adopted or implemented by off-the-shelf 802.15.4 devices.

Approaches described may provide significant increases in system throughput using cross-layered optimization model. Performance is likely to be dependent on the underlying PHY, but simulations on 802.15.4 may see up to 5x improvement. Described approaches integrate beam forming control and SIC performance with CSMA/CA MAC.

CSMA/CA is a good candidate for M2M communications. As M2M and WSN implementations increase, it is likely that both additional range and data throughput will be simultaneously demanded. In fact, with increased range, it follows that the throughout is likely to also increase. For example, the existing 802.15.4 standard is CSMA/CA based, so implementations using methods described herein may follow.

Aperson of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A wireless communication network control node method for use in a wireless communication network comprising a plurality of nodes operable to directly sense other nodes, said method comprising:

   determining for each said node in said network, an indication of direct neighbour nodes;
   grouping said nodes into node clusters such that each node in said network belongs to one node cluster and each node in the same node cluster can directly sense all other nodes in that cluster, and selecting a set of node clusters such that the total number of node clusters in said network is minimised;
   assessing, for a selected network performance objective, how many simultaneous signals can be successfully decoded by a node in said network and calculating, based on said assessment, a simultaneous signal group number;
   comparing the number of node clusters in said selected set of node clusters with said calculated simultaneous signal group number; and
   modifying said selected set of node clusters in dependence upon said simultaneous signal group number.

2. A method according to claim 1, wherein if the number of node clusters in said selected set of node clusters is smaller than said calculated simultaneous signal group number; said modifying comprises splitting said set of node clusters into smaller node clusters until the total number of node clusters matches the calculated simultaneous signal group number.

3. A method according to claim 2, wherein said splitting of said node clusters is performed such that the variation of size of said node clusters is minimised.

4. A method according to any preceding claim, wherein if the number of node clusters in said selected set of node clusters is greater than said calculated simultaneous signal group number; said modifying comprises merging said set of node clusters into larger node clusters until the total number of node clusters matches the calculated simultaneous signal group number.

5. A method according to claim 4, wherein said merging of said node clusters is performed such that hidden nodes in the network as a result of said merged node clusters is minimised.

**6.** A method according to any preceding claim, wherein said determining for each said node in said network an indication of direct neighbour nodes and said assessing, for a selected network performance objective, how many simultaneous signals can be successfully decoded by a node in said network, takes into account node beam pattern coverage.

**7.** A method according to any preceding claim, wherein said assessing, for a selected network performance objective, how many simultaneous signals can be successfully decoded by a node in said network comprises: assessing, based on use of Successive Interference Cancellation (SIC) processes within a network and said performance objective how many simultaneous signals can be successfully decoded by a node in said network.

**8.** A method according to claim 7, wherein calculating, based on said assessment, a simultaneous signal group number comprises: determining, for non-simultaneous signalling between said nodes, an indication of bandwidth utilisation, and dividing said assessed number of simultaneous signals which can be successfully decoded by a node in said network by a bandwidth utilisation ratio to give said simultaneous signal group number.

**9.** A method according to any preceding claim, comprising: informing said plurality of nodes of said modified selected set of node clusters to enable direct cluster group communication.

**10.** A method according to any preceding claim, comprising: instructing said plurality of nodes to perform code-based carrier sensing uncoordinated access communication within said cluster group.

**11.** A method according to any preceding claim, comprising: informing said plurality of nodes of a power assignment required to make use of said simultaneous signals.

**12.** A computer program product operable, when executed on a computer, to perform the method of any one of claims 1 to 11.

**13.** A wireless communication network control node for use in a wireless communication network comprising a plurality of nodes operable to directly sense other nodes, said network control node comprising:

neighbour determination logic operable to determine for each said node in said network, an indication of direct neighbour nodes;
grouping logic operable to group said nodes into node clusters such that each node in said network belongs to one node cluster and each node in the same node cluster can directly sense all other nodes in that cluster, and selecting a set of node clusters such that the total number of node clusters in said network is minimised;
simultaneous communication logic operable to assess, for a selected network performance objective, how many simultaneous signals can be successfully decoded by a node in said network and calculating, based on said assessment, a simultaneous signal group number;
cluster adjustment logic operable to compare the number of node clusters in said selected set of node clusters with said calculated simultaneous signal group number; and modify said selected set of node clusters in dependence upon said simultaneous signal group number.

**Patentansprüche**

**1.** Eine drahtlose Kommunikationsnetzwerk-Steuerknotenmethode für den Gebrauch in einem drahtlosen Kommunikationsnetzwerk, umfassend eine Vielzahl von Knoten, die betriebsfähig sind für das direkte Erfassen anderer Knoten, wobei besagte Methode umfasst:

Bestimmen für jeden besagten Knoten in besagtem Netzwerk einer Angabe der direkt benachbarten Knoten;
Gruppieren besagter Knoten in Knotenclustern, sodass jeder Knoten in besagtem Netzwerk zu einem Knotencluster gehört und jeder Knoten in demselben Knotencluster alle anderen Knoten in diesem Cluster direkt erfassen kann, und Auswählen eines Satzes von Knotenclustern, sodass die Gesamtzahl von Knotenclustern in besagtem Netzwerk minimal ist;
Bewerten, für ein ausgewähltes Netzwerkleistungsziel, wie viele simultane Signale erfolgreich dekodiert werden können mittels eines Knotens in besagtem Netzwerk, und Berechnen, basierend auf besagter Bewertung, einer simultanen Signalgruppenanzahl; Vergleichen der Anzahl von Knotenclustern in besagtem ausgewähltem Satz von Knotenclustern mit besagter berechneter simultaner Signalgruppenanzahl; und
Modifizieren besagten Satzes von Knotenclustern in Abhängigkeit von besagter simultaner Signalgruppenanzahl.

2. Verfahren nach Anspruch 1, wobei, wenn die Anzahl von Knotenclustern in besagtem ausgewählten Satz von Knotenclustern kleiner ist als die besagte berechnete simultane Signalgruppenanzahl, besagtes Modifizieren eine Aufspaltung besagten Satzes von Knotenclustern in kleinere Knotencluster umfasst, bis die Gesamtanzahl von Knotenclustern der berechneten simultanen Signalgruppenanzahl entspricht.

3. Verfahren nach Anspruch 2, wobei besagte Aufspaltung von besagten Knotenclustern so durchgeführt wird, dass die Änderung der Größe besagter Knotencluster minimal ist.

4. Verfahren nach irgendeinem der vorhergehenden Ansprüche, wobei, wenn die Anzahl von Knotenclustern in besagtem ausgewählten Satz von Knotenclustern größer ist als die besagte berechnete simultane Signalgruppenanzahl, besagtes Modifizieren ein Verschmelzen besagten Satzes von Knotenclustern in größere Knotencluster umfasst, bis die Gesamtanzahl von Knotenclustern der berechneten simultanen Signalgruppenanzahl entspricht.

5. Verfahren nach Anspruch 4, wobei besagtes Verschmelzen von besagten Knotenclustern so durchgeführt wird, dass diese versteckten Knoten im Netzwerk als Folge besagter Verschmelzung von Knotenclustern minimal sind.

6. Verfahren nach einem beliebigen der vorhergehenden Ansprüche, wobei besagte Bestimmung für jeden besagten Knoten in besagtem Netzwerk, einer Angabe der direkten Nachbarknoten und besagte Bewertung, für ein ausgewähltes Netzwerkleistungsziel, wie viele simultane Signale erfolgreich von einem Knoten in besagtem Netzwerk dekodiert werden können, den Knotenstrahlabdeckungsbereich berücksichtigen.

7. Verfahren nach einem beliebigen der vorhergehenden Ansprüche, wobei besagte Bewertung, für ein ausgewähltes Netzwerkleistungsziel, wie viele simultane Signale erfolgreich von einem Knoten in besagtem Netzwerk dekodiert werden können, umfasst: eine Bewertung, basierend auf dem Gebrauch von sukzessiven Interferenzunterdrückungsprozessen (SIC) innerhalb eines Netzwerks und auf besagtem Leistungsziel, wie viele simultane Signale erfolgreich von einem Knoten in besagtem Netzwerk dekodiert werden können.

8. Verfahren nach Anspruch 7, wobei die Berechnung, basierend auf besagter Bewertung, einer simultanen Signalgruppenanzahl umfasst: Bestimmen, für nicht simultane Signalisierung zwischen besagten Knoten, einer Angabe der Bandbreitenverwendung, und Teilen besagter berechneter Anzahl simultaner Signale, die erfolgreich von einem Knoten in besagtem Netzwerk dekodiert werden können, durch ein Bandbreitenverwendungsverhältnis, um besagte simultane Signalgruppenanzahl zu erhalten.

9. Verfahren nach irgendeinem der vorhergehenden Ansprüche, umfassend: Informieren besagter Vielzahl von Knoten von besagtem modifizierten ausgewählten Satz von Knotenclustern zum Ermöglichen einer direkten Clustergruppenkommunikation.

10. Verfahren nach irgendeinem der vorhergehenden Ansprüche, umfassend: Anordnen besagter Vielzahl von Knoten zum Durchführen einer codebasierten, unkoordinierten Trägerabtast-Zugangskommunikation innerhalb besagter Clustergruppe.

11. Verfahren nach einem beliebigen der vorstehenden Ansprüche, umfassend: Informieren besagter Vielzahl von Knoten einer Leistungszuweisung, die erforderlich ist, um besagte simultane Signale nutzen zu können.

12. Computerprogramm-Produkt, betriebsfähig, um bei dessen Ausführung auf einem Computer das Verfahren nach einem beliebigen der Ansprüche 1 bis 11 durchzuführen.

13. Drahtloser Kommunikationsnetzwerk-Steuerknoten für den Gebrauch in einem drahtlosen Kommunikationsnetzwerk, umfassend eine Vielzahl von Knoten, betriebsfähig zum direkten Erfassen anderer Knoten, wobei besagter Netzwerksteuerknoten umfasst:

Nachbarermittlungslogik, betriebsfähig zum Bestimmen eines jeden der besagten Knoten in besagtem Netzwerk, einer Angabe der direkten Nachbarknoten;
Gruppierungslogik, betriebsfähig zum Gruppieren besagter Knoten in Knotenclustern, sodass jeder Knoten in besagtem Netzwerk zu einem Knotencluster gehört und jeder Knoten in demselben Knotencluster direkt alle anderen Knoten in diesem Cluster erfassen kann, und Auswählen eines Satzes von Knotenclustern, sodass die Gesamtanzahl von Knotenclustern in besagtem Netzwerk minimal ist;
simultane Kommunikationslogik, betriebsfähig zum Bewerten, für ein ausgewähltes Netzwerkleistungsziel, wie viele simultane Signale erfolgreich dekodiert werden können mittels eines Knotens in besagtem Netzwerk, und Berechnen, basierend auf besagter Bewertung, einer simultanen Signalgruppenanzahl;
Clustereinstellungslogik, betriebsfähig zum Vergleichen der Anzahl von Knotenclustern in besagtem ausgewählten Satz von Knotenclustern mit der berechneten simultanen Signalgruppenanzahl; und Modifizieren besagten ausgewählten Satzes von Knotenclustern in Abhängigkeit besagter simultaner Signalgruppenanzahl.

**Revendications**

1. Procédé de noeud de commande de réseau de communication sans fil destiné à être utilisé dans un réseau de communication sans fil comprenant une pluralité de noeuds pouvant être utilisés pour détecter directement d'autres noeuds, ledit procédé comprenant les étapes suivantes :

   déterminer, pour chacun desdits noeuds dans ledit réseau, une indication des noeuds voisins directs ;
   grouper lesdits noeuds en grappes de noeuds de telle sorte que chaque noeuds dans ledit réseau appartienne à une grappe de noeuds et chaque noeud dans la même grappe de noeuds peut détecter directement tous les autres noeuds dans cette grappe, et sélectionner un ensemble de grappes de noeuds de manière à réduire au minimum le nombre total de grappes de noeuds dans ledit réseau ;
   évaluer, pour un objectif choisi de performances du réseau, le nombre de signaux simultanés dont le décodage par un noeud dans ledit réseau peut aboutir et calculer, en se basant sur ladite évaluation, un nombre de groupes de signaux simultanés ;
   comparer le nombre de grappes de noeuds dans ledit ensemble sélectionné de grappes de noeuds audit nombre calculé de groupes de signaux simultanés ; et
   modifier ledit ensemble sélectionné de grappes de noeuds en fonction dudit nombre de groupes de signaux simultanés.

2. Procédé selon la revendication 1, selon lequel, si le nombre de grappes de noeuds dans ledit ensemble sélectionné de grappes de noeuds est inférieur audit nombre calculé de groupes de signaux simultanés, ladite modification comprend le fractionnement dudit ensemble de grappes de noeuds en des grappes de noeuds plus petites jusqu'à ce que le nombre total de grappes de noeuds corresponde au nombre calculé de groupes de signaux simultanés.

3. Procédé selon la revendication 2, selon lequel ledit fractionnement desdites grappes de noeuds est exécuté de manière à réduire au minimum le changement de taille desdites grappes de noeuds.

4. Procédé selon l'une quelconque des revendications précédentes, selon lequel, si le nombre de grappes de noeuds dans ledit ensemble sélectionné de grappes de noeud est supérieur audit nombre calculé de groupes de signaux simultanés, ladite modification comprend la fusion dudit ensemble de grappes de noeuds en des grappes de noeuds plus grandes jusqu'à ce que le nombre total de grappes de noeuds corresponde au nombre calculé de groupes de signaux simultanés.

5. Procédé selon la revendication 4, selon lequel ladite fusion desdites grappes de noeuds est exécutée de manière à réduire au minimum les noeuds cachés dans le réseau résultant desdites grappes de noeuds fusionnées.

6. Procédé selon l'une quelconque des revendications précédentes, selon lequel ladite détermination, pour chacun desdits noeuds dans ledit réseau, d'une indication des noeuds voisins directs et ladite évaluation, pour un objectif choisi de performances du réseau, du nombre de signaux simultanés dont le décodage par un noeud dans ledit réseau peut aboutir prennent en compte la couverture par la structure du faisceau du noeud.

7. Procédé selon l'une quelconque des revendications précédentes, selon lequel ladite évaluation, pour un objectif choisi de performances du réseau, du nombre de signaux simultanés dont le décodage par un noeud dans ledit réseau peut aboutir comprend l'étape suivante : évaluer, en se basant sur l'utilisation de processus d'annulation des interférences successives (SIC) au sein d'un réseau et sur ledit objectif de performances, le nombre de signaux simultanés dont le décodage par un noeud dans ledit réseau peut aboutir.

8. Procédé selon la revendication 7, selon lequel ledit calcul, en se basant sur ladite évaluation, d'un nombre de groupes de signaux simultanés comprend les étapes suivantes : déterminer, pour la signalisation non simultanée entre lesdits noeuds, une indication d'utilisation de la largeur de bande, et diviser ledit nombre évalué de signaux simultanés dont le décodage par un noeud dans ledit réseau peut aboutir par un taux d'utilisation de la largeur de bande afin d'obtenir ledit nombre de groupes de signaux simultanés.

9. Procédé selon l'une quelconque des revendications précédentes, comprenant l'étape suivante : informer ladite pluralité de noeuds dudit ensemble sélectionné modifié de grappes de noeuds pour permettre une communication directe du groupe de grappes.

10. Procédé selon l'une quelconque des revendications précédentes, comprenant l'étape suivante : instruire ladite pluralité de noeuds d'effectuer une communication à accès non coordonné par détection de porteuse basée sur le code au sein dudit groupe de grappes.

11. Procédé selon l'une quelconque des revendications précédentes, comprenant l'étape suivante : informer ladite pluralité de noeuds d'une attribution de puissance requise pour pouvoir utiliser lesdits signaux simultanés.

12. Produit de programme informatique pouvant être utilisé pour, lorsqu'il est exécuté sur un ordinateur, mettre en oeuvre le procédé selon l'une quelconque des revendications 1 à 11.

13. Noeud de commande de réseau de communication sans fil destiné à être utilisé dans un réseau de communication sans fil comprenant une pluralité de noeuds pouvant être utilisés pour détecter directement d'autres noeuds, ledit noeud de commande de réseau comprenant :

   une logique de détermination de voisinage pouvant être utilisée pour déterminer, pour chacun desdits noeuds dans ledit réseau, une indication des noeuds voisins directs ;
   une logique de groupement pouvant être utilisée pour grouper lesdits noeuds en grappes de noeuds de telle sorte que chaque noeud dans ledit réseau appartienne à une grappe de noeuds et chaque noeud dans la même grappe de noeuds peut détecter directement tous les autres noeuds dans cette grappe, et sélectionner un ensemble de grappes de noeuds de manière à réduire au minimum le nombre total de grappes de noeuds dans ledit réseau ;
   une logique de communication simultanée pouvant être utilisée pour évaluer, pour un objectif choisi de performances du réseau, le nombre de signaux simultanés dont le décodage par un noeuds dans ledit réseau peut aboutir et calculer, en se basant sur ladite évaluation, un nombre de groupes de signaux simultanés ;
   une logique d'ajustement de grappe pouvant être utilisée pour comparer le nombre de grappes de noeuds dans ledit ensemble sélectionné de grappes de noeuds audit nombre calculé de groupes de signaux simultanés ; et modifier ledit ensemble sélectionné de grappes de noeuds en fonction dudit nombre de groupes de signaux simultanés.

Figure 1: Cross-layered network optimization procedures

## // Start of the algorithm

<u>Step 1: Heuristic search process</u>
**Given:**

- Phased-array with $X$ beam patterns
- $N$ nodes in a network
- Tree Counter (TC) = 0

**Objective:** derive any set of cluster combinations (a cluster tree) that minimizes the number of clusters in the network (or maximizes the average cluster size) while preserving alleviation of hidden terminals and beam coverage constraints.

**Start the prune and search clustering process for the nodes covered by each beam pattern**

*For* each beam pattern (1, 2 ... X) {

    1. Determine a set of nodes (S), which, average received signal strength of a node is higher than the received signal strength threshold. $S \in N$

    2. With the S, derive a set of isolated groups $(G_i)$ where any node connects to the rest of nodes in the group $G_i$ via any number of intermediate hops. $S = (G_1, G_2, ..., G_n)$

        *For* each isolated group $G_i$ {

            *// Build the cluster using the node with 0 or 1 neighbor (prune step)*

            *do* {

                A1. Form the cluster with such a node and its neighbor if existed.

                A2. Remove the members of the new cluster from $G_i$

                A3. Update the node weight for the updated topology

            } *while* (any node is connected to 0 or 1 neighbor within a single hop in the $G_i$);

            *// Use the minimum weight search algorithm to form a cluster tree for the rest of nodes (iterative search step)*

            *do* {

                B1. Update the node weight according to the current cluster tree level and branch

                B2. Find the number of nodes with the minimum weight in current $G_i$

                B3. Find the node with the minimum weight as a head node and build a cluster using neighbors of the head node.

                    B.3.1 The neighboring node with a lower weight gives a higher priority to join the cluster, meanwhile, ensuring no hidden terminal relationship between the newly joined node and the rest of existing cluster members.

                    B.3.2 The step B.3.1 is repeated for all neighbors of the head node in the order of node weight.

                    B.3.3 Save the new cluster with a unique tree ID: [level ID (TC), branch ID]

                    B. 3.4. *If* the number of nodes with the minimum weight in current $G_i > 1$ {

                        B.3.4.1 Repeat the step B.3.

                        B.3.4.2 *if* the selected head node is the last node with the minimum weight {

                            B.3.4.2.1 TC increment by 1;

                            B.3.4.2.2 Go to the step B.1.

                        }

                  } *else if* the number of nodes with the minimum weight in current $G_i = 1$ {

                      B.3.4.3 Remove the members of the new cluster from $G_i$

                      B.3.4.4 Update the node weight for the updated topology

                      B.3.4.5 TC Increment by 1;

                      B.3.4.6 Go to the step B.1.

                } *else* {

                    *// End of the search*

                }

            } *while* (there is any node has not been assigned a cluster in the $G_i$)

        }

}

## // End of the algorithm

Figure 2: Pseudo code of heuristic search algorithm

Figure 3a: Cluster formation example: a network graph where a circle with node ID denotes a vertice and a line between nodes denotes an edge. A node weight is the cluster search metric defined by the number of edges connected to a node

N = (1, 2, 3, 4, 5, 6, 7, 8, 9)     Gi = (1, 2, 3, 4, 5, 6, 7, 8, 9)

Figure 3b: A clustering result tree derived from the network graph of Figure 3a

Figure 4: SIC performance and power analysis

Figure 5: Flow chart of M2M network operations

Figure 6a: Performance comparison throughput - capacity enhancement

Figure 6b Performance comparison - energy efficiency

Figure 7a: Network operation after cluster set up

Figure 7b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2552168 A
- US 20070019604 A